# EUROPÄISCHE PATENTSCHRIFT

(11) **EP 0 696 538 B1**
(45) Veröffentlichungstag und Bekanntmachung des Hinweises auf die Patenterteilung: **23.12.1998**
(21) Anmeldenummer: 95108875.6
(22) Anmeldetag: 08.06.1995
(51) Int. Cl.: B65B 5/10

(54) **Anlage zum Einstapeln von mit nicht lagefixiertem Gut gefüllten Verpackungsbeuteln in einen Verpackungsbehälter**
Plant for stacking bags filled with displaceable material in a packaging container
Installation pour empiler des sachets remplis d'une matière déplaçable dans un récipient d'emballage

(30) Priorität: 12.07.1994 DE 9410970 U
(43) Veröffentlichungstag der Anmeldung: 14.02.1996
(73) Patentinhaber: OSTMA Maschinenbau GmbH, 53909 Zülpich (DE)
(72) Erfinder: Odenthal, Heinz F., D-53909 Zülpich (DE)
(74) Vertreter: Honke, Manfred, Dr.-Ing.

(56) Entgegenhaltungen:
- EP-A- 0 331 210
- US-A- 3 352 404
- US-A- 3 425 184

## Beschreibung

Die Erfindung betrifft eine Anlage zum Einstapeln von mit nicht lagefixiertem Gut gefüllten Verpackungsbeuteln, die schuppenförmig zu Verpackungsbeutelgesamtheiten mit einer definierten Anzahl von Verpackungsbeuteln zusammengelegt werden, in einen in einer Einstapelstation vorstehenden, zu füllenden Verpackungsbehälter, insbesondere in einen Verpackungskarton, wobei ein Zuführförderband für die Verpackungsbeutel vorgesehen ist, wobei in Förderrichtung hinter dem Zuführförderband zumindest ein Füllförderer mit einem endlos umlaufend geführten Untergurt sowie einem endlos umlaufend geführten Abdeckobergurt angeordnet ist, der die Verpackungsbeutelgesamtheiten gegen den Untergurt festhält, wobei der Füllförderer einen Einstapelkopf besitzt, der in einen in der Einstapelstation vorstehenden Verpackungsbehälter ein- und ausfahrbar ist, wobei die Antriebe und die kinematische Steuerung der Anlage wie folgt eingerichtet sind:
das Zuführförderband für die äquidistant aufliegenden Verpackungsbeutel arbeitet kontinuierlich mit einer vorgebbaren Zuführgeschwindigkeit;
der Füllförderer arbeitet zum Zwecke der Bildung einer Verpackungsbeutelgesamtheit mit einer Schuppungsgeschwindigkeit, die kleiner ist als die Zuführgeschwindigkeit;
der Füllförderer arbeitet zum Zwecke der Bildung eines Abstandes und damit einer "Zeitlücke" zwischen aufeinanderfolgenden Verpackungsbeutelgesamtheiten nach jeder gebildeten Verpackungsbeutelgesamtheit mit einer gegenüber der Schuppungsgeschwindigkeit erhöhten Zeitlückengeschwindigkeit, wobei die Zeitlückengeschwindigkeit so eingerichtet ist, daß die dadurch definierte Zeitlücke ausreicht, um ohne Unterbrechung der Verpackungsbeutelzuführung mit Hilfe des Zuführförderbandes aus der Einstapelstation einen befüllten Verpackungsbehälter abzuführen und einen zu füllenden Verpackungsbehälter einzuführen;
der Einstapelkopf des Füllförderers bewegt sich mit Beginn der Abführung eines befüllten Verpackungsbehälters aus der Einstapelstation heraus aus diesem Verpackungsbehälter heraus und nach Einführung eines zu befüllenden Verpackungsbehälters in diesen wieder hinein.

Einstapeln bedeutet im Rahmen der Erfindung, daß Stapel aus mehr oder weniger vertikal nebeneinanderstehenden Verpackungsbeuteln in den Verpackungsbehältern gebildet werden. Insoweit handelt es sich gleichsam um eine horizontale Stapelung der Verpackungsbeutel in den Verpackungsbehältern, - im Gegensatz zu der üblichen vertikalen Stapelung von Gegenständen.

Bei der bekannten Anlage, von der die Erfindung ausgeht (EP 0 331 210 A2), ist ein Zuführförderband für die Verpackungsbeutel vorgesehen. Außerdem ist in Förderrichtung hinter dem Zuführförderband ein Füllförderer mit einem endlos umlaufend geführten Untergurt sowie einem endlos umlaufend geführten Abdeckobergurt angeordnet, der die Verpackungsbeutelgesamtheiten gegen den Untergurt festhält. Bei der bekannten Ausführungsform ist jedoch zwischen dem Zuführförderer und dem Füllförderer ein Zwischenförderer angeordnet, auf dem die zugeführten Verpackungsbeutel schuppenförmig zu den Verpackungsbeutelgesamtheiten zusammengelegt werden. Die Verpackungsbeutel kommen ohne Überlappung auf dem Zuführförderer hintereinander flachliegend an. Der Zwischenförderer arbeitet gegenüber dem Zuführförderer mit langsamerer Geschwindigkeit, so daß sich die Verpackungsbeutel schuppenförmig aufeinanderlegen und die Verpackungsbeutelgesamtheit aus einer vorgegebenen Anzahl von Verpackungsbeuteln bilden. Der Zwischenförderer wird nach Bildung einer Verpackungsbeutelgesamtheit mit einer vorgegebenen Anzahl von Verpackungsbeuteln kurzfristig beschleunigt, wobei gegenüber den folgenden Verpackungsbeuteln ein Abstand, chronologisch ausgedrückt, eine sogenannte "Zeitlücke", gebildet wird. Die Verpackungsbeutelgesamtheit wird über den Füllförderer in einen Verpackungsbehälter eingeführt, der am Ende des Füllförderers vorsteht. Der Füllförderer besitzt einen Einstapelkopf, der in dieser Position des Verpackungsbehälters in diesen ein- und ausfahrbar ist. Das muß innerhalb der "Zeitlücke" geschehen. Der Zwischenförderer ist bei der bekannten Ausführungsform einerseits der Förderer, auf dem die Bildung der Verpackungsbeutelgesamtheiten erfolgt, andererseits ein Beschleunigungsförderer für die Ausbildung des beschriebenen Abstandes und die Einrichtung der "Zeitlücke". Demgegenüber funktioniert der Füllförderer lediglich als Füllförderer und arbeitet der Füllförderer mit konstanter Geschwindigkeit. Die bekannten Maßnahmen haben sich bewährt, jedoch können, wenn die Anlage mit hoher oder sehr hoher Leistung betrieben werden soll und folglich die beschriebenen Fördereinrichtungen mit verhältnismäßig großen Geschwindigkeiten arbeiten, insbesondere bei dem Aufbau der Verpackungsbeutelgesamtheiten aus geschuppten Verpackungsbeuteln, Störungen auftreten, die sich in den Füllförderer hinein fortsetzen und das Einstapeln der Verpackungsbeutel in die Verpackungsbehälter beeinträchtigen können. Die Störungen können insbesondere dann auftreten, wenn, wie bei der bekannten Ausführungsform vorgesehen, die Verpackungsbehälter nicht selbst zwangsgeführt sind, sondern sich beim Einstapeln der Verpackungsbeutel der einzelnen Verpackungsbeutelgesamtheiten unter dem Druck der sich einstapelnden Verpackungsbeutel verschieben. Die bekannte Anlage ist daher, auch in Abhängigkeit von dem nicht lagefixiertem Gut in den Verpackungsbeuteln, bei sehr hoher Leistung nicht immer funktionssicher.

Der Erfindung liegt das technische Problem zugrunde, eine Anlage des eingangs beschriebenen grundsätzlichen Aufbaus sowie der eingangs beschriebenen Zweckbestimmung so einzurichten, daß sie auch bei hoher und sehr hoher Leistung funktionssicher arbeitet.

Zur Lösung dieses technischen Problems ist Gegenstand der Erfindung eine Anlage, welche dadurch gekennzeichnet ist, daR ein Verpackungsbehälterförderer vorgesehen ist, der die zu füllenden Verpackungsbehälter nacheinander in die Einstapelstation einführt und die mit einer Verpackungsbeutelgesamtheit befüllten Verpackungsbehälter aus der Einstapelstation abführt, daR der Untergurt des Füllförderers gelocht ist und im Bereich seines Anschlusses an das Zuführförderband über eine Unterdruckkammer geführt ist, daß der Verpackungsbehälterförderer zumindest im Bereich der Einstapelstation mit einer Einrichtung zur transportwirksamen Fixierung der Verpackungsbehälter ausgerüstet ist, daß die unter Unterdruck stehende Unterdruckkammer mit dem gelochten Untergurt des Füllförderers die sich bildende Verpackungsbeutelgesamtheit fixiert, und daß sich der Verpackungsbehälterförderer bei der Abführung eines befüllten Verpackungsbehälters aus der Einstapelstation heraus sowie bei der Einführung des zu befüllenden Verpackungsbehälters in die Einstapelstation hinein unter Mitnahme des Verpackungsbehälters schneller bewegt als beim Einstapelvorgang einer Verpackungsbeutelgesamtheit.

Es versteht sich, daß der Verpackungsbehälterförderer so bewegt wird, daß die "Zeitlücke" ausreicht, um einen befüllten Verpackungsbehälter aus der Einstapelstation abzuführen und den zu befüllenden Verpackungsbehälter in die Einstapelstation einzuführen und dabei den Einstapelkopf des Füllförderers aus dem befüllten Verpackungsbehälter herauszufahren und in den zu befüllenden Verpackungsbehälter wieder einzufahren.

Die Erfindung geht von der Erkenntnis aus, daR bei der eingangs beschriebenen Anlage der Füllförderer eine Doppelfunktion erfüllen kann. Er kann nämlich, wie beschrieben, das Einfüllen der Verpackungsbeutelgesamtheiten in einen in der Einstapelstation vorstehenden Verpackungsbehälter vornehmen und außerdem als Beschleunigungsförderer funktionieren, um den Abstand zwischen aufeinanderfolgenden Verpackungsbeutelgesamtheiten und damit die sogenannte "Zeitlücke" zu verwirklichen. Der eingangs zum Stand der Technik erwähnte Zwischenförderer kann folglich entfallen. Darin liegt bereits eine beachtliche Vereinfachung. Im übrigen kann die erfindungsgemäße Anlage mit sehr hoher Leistung arbeiten, und zwar auch bei dem vorstehend erwähnten angeschlossenen Beschleunigungsvorgang der Verpackungsbeutelgesamtheiten, weil diese auf dem Anfangsteil des Füllförderers sicher festgehalten werden, weil der Untergurt des Füllförderers gelocht ist und im Bereich seines Anschlusses an das Zuführförderband über eine Unterdruckkammer geführt ist. Aber auch das Abführen eines befüllten Verpackungsbehälters und das Zuführen eines zu füllenden Verpackungsbehälters können mit sehr großer Geschwindigkeit erfolgen, weil der Verpackungsbehälterförderer die Verpackungsbehälter bei der beschriebenen Operation fixiert festhält. Außerdem werden die Verpackungsbehälter bei der erfindungsgemäßen Anlage synchron mit dem Produktfluß zwangstransportiert - mit der Möglichkeit durch steuerungstechnische Maßnahmen die Füll- und Abtransportgeschwindigkeit der tolerierten Produktdicke anzupassen. Dadurch entstehen keine zusätzlichen, in der X-Bewegung (Transportrichtung der Verpackungsbehälter) wirkenden Kräfte. Gleichzeitig werden die Reibungskräfte, die bei den bekannten Anlagen durch den für den Transport der Verpackungsbehälter benötigten Druck entstehen, minimiert. Dementsprechend sind die erlaubten Füll- und Abtransportgeschwindigkeiten bei der erfindungsgemäßen Anlage um ein Vielfaches höher, was insgesamt mit den anderen erwähnten Maßnahmen eine mehr als doppelte Leistung erlaubt.

Im Ergebnis kann die erfindungsgemäße Anlage mit sehr hoher und extrem hoher Leistung und entsprechend mit großer und sehr großer Geschwindigkeit der zur Anlage gehörenden Fördereinrichtungen funktionssicher betrieben werden. Nichtsdestoweniger werden die Verpackungsbeutel sehr schonend manipuliert. Da die Fixierung auf dem Füllförderer hauptsächlich über Unterdruck erfolgt, ist nur ein geringer produktschonender Anpreßdruck erforderlich. Auch bei hohen Geschwindigkeiten ist die Positionierung der Verpackungsbeutel sehr genau.

Im einzelnen bestehen verschiedene Möglichkeiten der weiteren Ausbildung und Gestaltung der erfindungsgemäßen Anlage. So empfiehlt es sich, den Abdeckobergurt des Füllförderers im Anschluß an die Unterdruckkammer anzuordnen, so daß der Füllförderer im Bereich der Unterdruckkammer von dem Abdeckobergurt nicht bedeckt ist. Nach bevorzugter Ausführungsform der Erfindung ist zur transportwirksamen Fixierung der Verpackungsbehälter im Bereich der Einstapelstation ein Förderer mit Unterdruckfixierung angeordnet.

Die erfindungsgemäße Anlage ist selbstverständlich mit den erforderlichen Antrieben ausgerüstet und besitzt die erforderlichen Einrichtungen für die kinematische Steuerung. Dazu kann ohne weiteres mit den Hilfsmitteln der modernen Antriebs- und Steuerungstechnik gearbeitet werden. Die Antriebe und die kinematische Steuerung weisen zweckmäßigerweise eine Steuereinrichtung auf, die mit einer Zähleinrichtung für die Anzahl der Verpackungsbeutel in den Verpackungsbeutelgesamtheiten sowie mit Sensoren und Lichtschranken für die Steuerung der Bewegung der verschiedenen Fördereinrichtungen sowie für die Steuerung der Bewegung des Einstapelkopfes ausgerüstet ist. Eine Ausführungsform der Erfindung, die es erlaubt, in den Verpackungsbehältern das Einstapeln der Verpackungsbeutel so vorzunehmen, daß der horizontale Stapel gleichsam überall die gleiche Dichte aufweist, ist dadurch gekennzeichnet, daß der Verpackungsbehälterförderer während des Einstapelvorganges einer Verpackungsbeutelgesamtheit sich zunächst nach Maßgabe der Schuppungsgeschwindigkeit und danach nach Maßgabe der Zeitlückengeschwindigkeit bewegt.

Im folgenden werden die beschriebenen und weitere Merkmale der Erfindung anhand einer lediglich ein Ausführungsbeispiel darstellenden Zeichnung ausführlicher erläutert. Es zeigen:
- Fig. 1: perspektivisch die wesentlichen Bauteile einer erfindungsgemäßen Anlage, und
- Fig. 2: perspektivisch eine andere Ausführungsform einer erfindungsgemäßen Anlage.

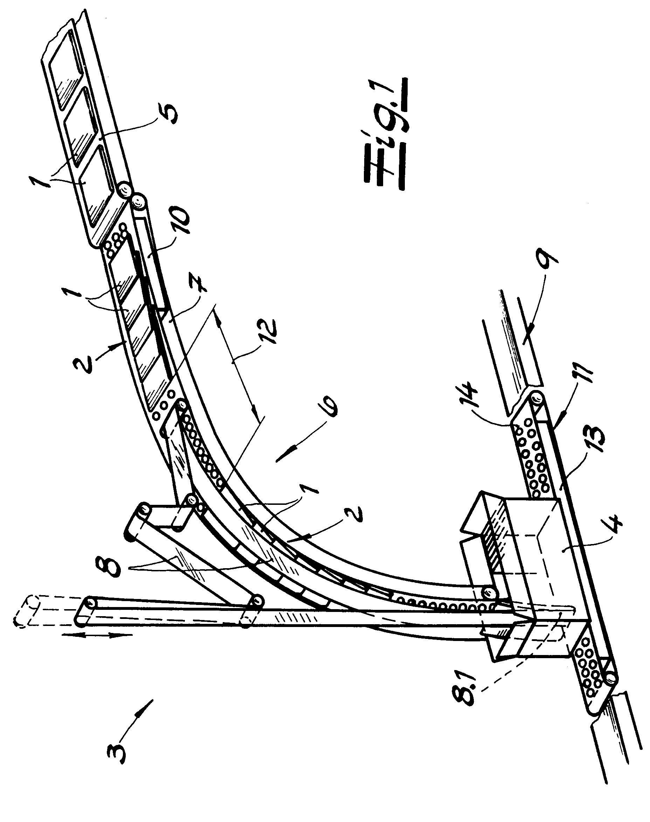

Die in der Fig. 1 dargestellte Anlage dient zum Einstapeln von mit nicht lagefixiertem Gut gefüllten Verpackungsbeuteln 1, die schuppenförmig zu Verpackungsbeutelgesamtheiten 2 mit einer definierten Anzahl von Verpackungsbeuteln 1 zusammengelegt werden, in einen in einer Einstapelstation 3 vorstehenden, zu füllenden Verpackungsbehälter 4, insbesondere in einen Verpackungskarton. Um in der Fig. 1 die wesentlichen Bauteile der erfindungsgemäßen Anlage deutlich darstellen zu können, wurden das Maschinengestell und die Antriebe fortgelassen.

Man erkennt in der Fig. 1 ein Zuführförderband 5 für die Verpackungsbeutel 1. In Förderrichtung hinter dem Zuführförderband 5 ist ein Füllförderer 6 mit einem endlos umlaufend geführten Untergurt 7 sowie einem endlos umlaufend geführten Abdeckobergurt 8 angeordnet, der die Verpackungsbeutelgesamtheiten 2 gegen den Untergurt 7 festhält. Der Füllförderer 6 besitzt einen Einstapelkopf 8.1, der in einen in der Einstapelstation 3 vorstehenden Verpackungsbehälter 4 ein- und ausfahrbar ist. Insoweit ist die erfindungsgemäße Anlage mit bekannten Aggregaten ausgerüstet (EP 0 331 210 A2). Im übrigen ist ein Verpackungsbehälterförderer 9 vorgesehen, der die zu füllenden Verpackungsbehälter 4 nacheinander in die Einstapelstation 3 einführt und die mit einer Verpackungsbehältergesamtheit 2 befüllten Verpackungsbehälter 4 aus der Einstapelstation 3 abführt.

Der Untergurt 7 des Füllförderers 6 ist gelocht und im Bereich seines Anschlusses an das Zuführförderband 5 über eine Unterdruckkammer 10 geführt. Der Verpackungsbehälterförderer 9 ist zumindest im Bereich der EinStapelstation 3 mit einer Einrichtung 11 zur transportwirksamen Fixierung der Verpackungsbehälter 4 ausgerüstet.

Die Antriebe und die kinematische Steuerung der Anlage sind besonders eingerichtet. Das Zuführförderband 5 für die äquidistant aufeinanderliegenden Verpackungsbeutel 1 arbeitet kontinuierlich mit einer vorgebbaren Zuführgeschwindigkeit. Der Füllförderer 6 arbeitet zum Zwecke der Bildung einer Verpackungsbeutelgesamtheit 2 mit einer Schuppungsgeschwindigkeit, die kleiner ist als die Zuführgeschwindigkeit, wobei die unter Unterdruck stehende Unterdruckkammer 10 mit dem gelochten Untergurt 7 des Füllförderers 6 die sich bildende Verpackungsbeutelgesamtheit 2 fixiert. Der Füllförderer 6 arbeitet aber zum Zwecke der Bildung eines Abstandes 12 und damit einer "Zeitlücke" zwischen aufeinanderfolgenden Verpackungsbeutelgesamtheiten 2 nach jeder gebildeten Verpackungsbeutelgesamtheit 2 mit einer gegenüber der Schuppungsgeschwindigkeit erhöhten Zeitlückengeschwindigkeit, wobei die Zeitlückengeschwindigkeit so eingerichtet ist, daß die dadurch definierte Zeitlücke ausreicht, um ohne Unterbrechung der Verpackungsbeutelzuführung mit Hilfe des Zuführföderbandes 5 aus der Einstapelstation 3 einen befüllten Verpackungsbehälter 4 abzuführen und einen zu füllenden Verpackungsbehälter 4 in die Einstapelstation 3 einzuführen. Der Einstapelkopf 8.1 des Füllförderers 6 bewegt sich mit Beginn der Abführung eines befüllten Verpackungsbehälters 4 aus diesem heraus und nach Einführung eines zu füllenden Verpackungsbehälters 4 in diesen wieder hinein.

Die Auslegung insgesamt ist so getroffen, daß sich der Verpackungsbehälterförderer 9 bei der Abführung eines befüllten Verpackungsbehälters 4 aus der Einstapelstation 3 heraus sowie bei der Einführung eines zu befüllenden Verpackungsbehälters 4 in die Einstapelstation 3 hinein unter Mitnahme des Verpackungsbehälters 4 schneller bewegt als beim Einstapelvorgang einer Verpackungsbeutelgesamtheit 2.

Im Ausführungsbeispiel schließt der Abdeckgurt 8 des Füllförderers 6 anordnungsmäßig an die Unterdruckkammer 10 an. Zur transportwirksamen Fixierung der Verpackungsbehälter 4 im Bereich der Einstapelstation 3 ist ein Verpackungsbehälterförderer 9 mit Unterdruckfixierung angeordnet. Man erkennt die entsprechende Unterdruckkammer 13 und ein gelochtes Förderband 14 dieses Unterdruckförderers. Im übrigen kann der Verpackungsbehälterförderer 9 als Rundriementransport ausgeführt sein.

Die Antriebe und die kinematische Steuerung weisen eine Steuereinrichtung auf, die mit einer Zähleinrichtung für die Anzahl der Verpackungsbeutel 1 in den Verpackungsbeutelgesamtheiten 2 sowie mit Sensoren und/oder Lichtschranken für die Steuerung der Bewegung der verschiedenen Fördereinrichtungen und für die Steuerung der Bewegung des Einstapelkopfes 8.1 ausgerüstet ist. Das wurde im einzelnen nicht gezeichnet und läßt sich mit den Bauteilen und Aggregaten der modernen Steuerungs- und Antriebstechnik, auch in bezug auf die Abstimmung der verschiedenen Geschwindigkeiten aufeinander, unschwer verwirklichen. Es empfiehlt sich, die Anordnung so zu treffen, daß der Verpackungsbehälterförderer 9 während des Einstapelvorganges einer Verpackungsbeutelgesamtheit 2 sich zunächst nach Maßgabe der Schuppungsgeschwindigkeit und danach nach Maßgabe der Zeitlückengeschwindigkeit schneller bewegt.

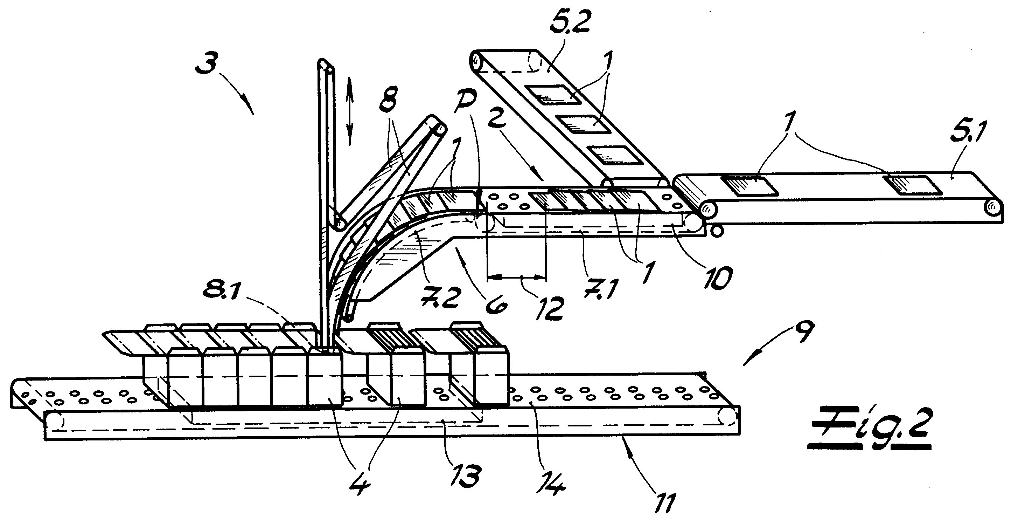

Die in der Fig. 2 dargestellte Anlage entspricht in ihrem grundsätzlichen Aufbau dem der Anlage in Fig. 1. Insoweit wurden auch die gleichen Bezugszeichen eingetragen. Die Zuführung der Verpackungsbeutel 1 kann jedoch so wie in Fig. 1 dargestellt, nämlich in Förderrichtung des Füllförderers 6 oder um 90° verschwenkt dazu erfolgen. Es können aber auch zwei Zuführförderbänder 5.1 und 5.2 entsprechend angeordnet sein, die wahlweise eingeschaltet werden. Bei der Anlage in Fig. 2 ist der Füllförderer 6 in zwei Teilförderer aufgelöst. Das gilt auch für den Untergurt 7, der aus den Teilgurten 7.1 und 7.2 besteht. Sobald der Abstand 12 zwischen aufeinanderfolgenden Verpackungsbeutelgesamtheiten 2 die Position P erreicht, beschleunigt der Teilgurt 7.2 und fördert die voreilende Verpackungsbeutelgesamtheit 2 in den vorstehenden Verpackungsbehälter 4. Hierdurch wird die "Zeitlücke" vergrößert.

## Patentansprüche

1. Anlage zum Einstapeln von mit nicht lagefixiertem Gut gefüllten Verpackungsbeuteln (1), die schuppenförmig zu Verpackungsbeutelgesamtheiten (2) mit einer definierten Anzahl von Verpackungsbeuteln (1) zusammengelegt werden, in einen in einer Einstapelstation (3) vorstehenden, zu füllenden Verpackungsbehälter (4), insbesondere in einen Verpackungskarton,
wobei ein Zuführförderband (5) für die Verpackungsbeutel (1) vorgesehen ist, wobei in Förderrichtung hinter dem Zuführförderband (5) zumindest ein Füllförderer (6) mit einem endlos umlaufend geführten Untergurt (7) sowie einem endlos umlaufend geführten Abdeckobergurt (8) angeordnet ist, der die Verpackungsbeutelgesamtheiten (2) gegen den Untergurt (7) festhält, wobei der Füllförderer (6) einen Einstapelkopf (8.1) besitzt, der in einen in der Einstapelstation (3) vorstehenden Verpackungsbehälter (4) ein- und ausfahrbar ist, wobei die Antriebe und die kinematische Steuerung der Anlage wie folgt eingerichtet sind:
das Zuführförderband (5) für die äquidistant aufliegenden Verpackungsbeutel (1) arbeitet kontinuierlich mit einer vorgebbaren Zuführgeschwindigkeit;
der Füllförderer (6) arbeitet zum Zwecke der Bildung einer Verpackungsbeutelgesamtheit (2) mit einer Schuppungsgeschwindigkeit, die kleiner ist als die Zuführgeschwindigkeit;
der Füllförderer (6) arbeitet zum Zwecke der Bildung eines Abstandes (12) und damit einer "Zeitlücke" zwischen aufeinanderfolgenden Verpackungsbeutelgesamtheiten (2) nach jeder gebildeten Verpackungsbeutelgesamtheit (2) mit einer gegenüber der Schuppungsgeschwindigkeit erhöhten Zeitlückengeschwindigkeit, wobei die Zeitlückengeschwindigkeit so eingerichtet ist, daß die dadurch definierte Zeitlücke ausreicht, um ohne Unterbrechung der Verpackungsbeutelzuführung mit Hilfe des Zuführförderbandes (5) aus der Einstapelstation (3) einen befüllten Verpackungsbehälter (4) abzuführen und einen zu füllenden Verpackungsbehälter (4) einzuführen;
der Einstapelkopf (8.1) des Füllförderers (6) bewegt sich mit Beginn der Abführung eines befüllten Verpackungsbehälters (4) aus der Einstapelstation (3) heraus aus diesem Verpackungsbehälter (4) heraus und nach Einführung eines zu befüllenden Verpackungsbehälters (4) in diesen wieder hinein;
**dadurch gekennzeichnet**, daß ein Verpackungsbehälterförderer (9) vorgesehen ist, der die zu füllenden Verpackungsbehälter (4) nacheinander in die Einstapelstation (3) einführt und die mit einer Verpackungsbeutelgesamtheit (2) befüllten Verpackungsbehälter (4) aus der Einstapelstation (3) abführt,
daR der Untergurt (7) des Füllförderers (6) gelocht ist und im Bereich seines Anschlusses an das Zuführförderband (5) über eine Unterdruckkammer (10) geführt ist,
daß der Verpackungsbehälterförderer (9) zumindest im Bereich der Einstapelstation (3) mit einer Einrichtung (11) zur transportwirksamen Fixierung der Verpackungsbehälter (4) ausgerüstet ist,
daß die unter Unterdruck stehende Unterdruckkammer (10) mit dem gelochten Untergurt (7) des Füllförderers (6) die sich bildende Verpackungsbeutelgesamtheit (2) fixiert,
und daß sich der Verpackungsbehälterförderer (9) bei der Abführung eines befüllten Verpackungsbehälters (4) aus der Einstapelstation (3) heraus sowie bei der Einführung des zu befüllenden Verpackungsbehälters (4) in die Einstapelstation (3) hinein unter Mitnahme des Verpackungsbehälters (4) schneller bewegt als beim Einstapelvorgang einer Verpackungsbeutelgesamtheit (2).

2. Anlage nach Anspruch 1, wobei der Abdeckobergurt (8) des Füllförderers (6) an die Unterdruckkammer (10) anschließt.

3. Anlage nach einem der Ansprüche 1 oder 2, wobei zur transportwirksamen Fixierung der Verpackungsbehälter (1) im Bereich der Einstapelstation (3) ein Verpackungsbehälterförderer (9) mit Unterdruckfixierung angeordnet ist.

4. Anlage nach einem der Ansprüche 1 bis 3, wobei die Antriebe und die kinematische Steuerung eine Steuereinrichtung aufweisen, die mit einer Zähleinrichtung für die Anzahl der Verpackungsbeutel (1) in den Verpackungsbeutelgesamtheiten (2) sowie mit Sensoren und/oder Lichtschranken für die Steuerung der Geschwindigkeit der vorstehenden Fördereinrichtungen und der Bewegung des Einstapelkopfes (8.1) ausgerüstet ist.

5. Anlage nach einem der Ansprüche 1 bis 4, wobei der Verpackungsbehälterförderer (9) während des Einstapelvorganges einer Verpackungsbeutelgesamtheit (2) sich zunächst nach Maßgabe der Schuppungsgeschwindigkeit und danach nach Maßgabe der Zeitlückengeschwindigkeit schneller bewegt.

## Claims

1. An installation for stacking packaging bags (1), which are filled with material which is not fixed in position and which are placed together in an imbricated manner to form packaging bag entities (2) comprising a defined number of packaging bags (1), into a packaging container (4) which is to be filled, particularly a packaging carton, which is present in a stacking station (3),
wherein a feeder conveyor belt (5) is provided for the packaging bags (1), wherein at least one filling conveyor (6), comprising a lower belt (7) which is guided so that it circulates endlessly and comprising a covering upper belt (8) which is guided so that it circulates endlessly and which holds the packaging bag entities (2) against the lower belt (7), is disposed behind the feeder conveyor belt (5) in the direction of conveying, wherein the filling conveyor (6) has a stacking head (8.1) which can move in and out of a packaging container (4) which is present in the stacking station (3), wherein the drives and the kinematic control system of the installation are designed as follows:
the feeder conveyor belt (5) for the equidistantly resting packaging bags (1) operates continuously at a predeterminable feeding speed;
for the purpose of forming a packaging bag entity (2), the filling conveyor (6) operates at an imbricating speed which is less than the feeding speed;
for the purpose of forming a spacing (12) and thus a "time gap" between successive packaging bag entities (2), the filling conveyor (6) operates after each packaging bag entity (2) which is formed at a time gap speed which is increased compared with the imbricating speed, wherein the time gap speed is designed so that the time gap which is thereby defined is sufficient, without interrupting the feeding of the packaging bags by means of the feeder conveyor belt (5), to carry a filled packaging container (4) away from the stacking station (3) and to introduce a packaging container (4) to be filled;
at the start of the carrying away of a filled packaging container (4) from the stacking station (3) the stacking head (8.1) of the filling conveyor (6) moves out of said packaging container (4) and after the introduction of a packaging container (4) which is to be filled moves into the latter again;
characterised in that a packaging container conveyor (9) is provided which introduces the packaging containers (4) which are to be filled into the stacking station (3) in succession and which carries away the packaging containers (4) which are filled with a packaging bag entity (2) from the stacking station (3),
that the lower belt (7) of the filling conveyor (6) is perforated and is passed over a vacuum chamber (10) in the region of its connection to the feeder conveyor belt (5),
that the packaging container conveyor (9) is equipped, at least in the region of the stacking station (3), with a device (11) for the fixation of the packaging containers (4) in a manner which is effective for transport,
that the vacuum chamber (10) which is under a reduced pressure, together with the perforated lower belt (7) of the filling conveyor (6), fixes the packaging bag entity (2) which is being formed,
and that when a filled packaging container (4) is carried away from the stacking station (3) and when the packaging container (4) which is to be filled is introduced into the stacking station (3) the packaging container conveyor (9) moves, with the entrainment of the packaging container (4), more rapidly than during the stacking operation of a packaging bag entity (2).

2. An installation according to claim 1, wherein the covering upper belt (8) of the filling conveyor (6) adjoins the vacuum chamber (10).

3. An installation according to either one of claims 1 or 2, wherein a packaging container conveyor (9) which comprises vacuum fixation is disposed in the region of the stacking station (3) for the fixation of the packaging containers (4) in a manner which is effective for transport.

4. An installation according to any one of claims 1 to 3, wherein the drives and the kinematic control system comprise a controller which is equipped with a counting device for the number of packaging bags (1) in the packaging bag entities (2) and which is equipped with sensors and/or photoelectric barriers for controlling the speed of the conveying devices which are present and for controlling the movement of the stacking head (8.1).

5. An installation according to any one of claims 1 to 4, wherein during the stacking operation of a packaging bag entity (2) the packaging container conveyor (9) first moves according to the imbricating speed and thereafter moves more rapidly according to the time gap speed.

## Revendications

1. Installation pour empiler des sachets d'emballage (1), remplis de produit non immobilisé et réunis selon une disposition en écailles de poisson sous forme d'ensembles de sachets d'emballage (2) comportant un nombre défini de sachets d'emballage (1), dans un récipient d'emballage à remplir (4), en particulier dans un carton d'emballage, qui fait saillie dans un poste d'empilage (3),
dans laquelle un convoyeur d'alimentation à bande (5) est prévu pour les sachets d'emballage (1), dans laquelle, en aval du convoyeur d'alimentation à bande (5) par rapport au sens de convoyage il est prévu au moins un convoyeur de remplissage (6) avec un brin inférieur à guidage périphérique sans fin (7) et un brin supérieur couvrant à guidage périphérique sans fin (8) qui plaque les ensembles de sachets d'emballage (2) contre le brin inférieur (7), le convoyeur de remplissage (6) possédant une tête d'empilage (8.1) qui peut être introduite dans un récipient d'emballage (4) faisant saillie au poste d'empilage (3) et en être sortie, les moyens d'entraînement et le moyen de commande cinématique de l'installation étant agencés comme suit :
le convoyeur d'alimentation à bande (5) pour les sachets d'emballage (1) disposés de manière équidistante fonctionne en continu à une vitesse d'alimentation prédéfinie ;
pour former un ensemble de sachets d'emballage (2), le convoyeur de remplissage (6) fonctionne à une vitesse de positionnement en écailles inférieure à la vitesse d'alimentation ;
pour créer une distance (12) et donc un 〈〈 intervalle de temps 〉〉 entre des ensembles de sachets d'emballage successifs (2), le convoyeur de remplissage (6) fonctionne, une fois qu'un ensemble de sachets d'emballage (2) a été formé, à une vitesse de création d'intervalle de temps supérieure à la vitesse de positionnement en écailles, la vitesse de création d'intervalle de temps étant calculée pour que l'intervalle de temps ainsi défini soit suffisant pour évacuer un récipient d'emballage rempli (4) du poste d'empilage (3) et pour y mettre en place un récipient d'emballage à remplir (4) sans interrompre l'alimentation en sachets d'emballage par le convoyeur d'alimentation à bande (5);
au début de l'évacuation d'un récipient d'emballage rempli (4) hors du poste d'empilage (3), la tête d'empilage (8.1) du convoyeur de remplissage (6) sort de ce récipient d'emballage (4) et y revient après la mise en place d'un récipient d'emballage à remplir (4) ;
caractérisée en ce qu'il est prévu un convoyeur de récipients d'emballage (9) qui met en place les récipients d'emballage à remplir (4) les uns après les autres dans le poste d'empilage (3) et qui évacue du poste d'empilage (3) les récipients d'emballage (4) remplis d'un ensemble de sachets d'emballage (2),
en ce que le brin inférieur (7) du convoyeur de remplissage (6) est perforé et passe, dans sa zone de jonction avec le convoyeur d'alimentation à bande (5), audessus d'une chambre à dépression (10),
en ce que le convoyeur de récipients d'emballage (9) est muni, au moins dans la zone de la station d'empilage (3), d'un dispositif (11) pour immobiliser efficacement les récipients d'emballage (4) au cours de leur transport,
en ce que la chambre à dépression (10) placée sous dépression immobilise, conjointement avec le brin inférieur perforé (7) du convoyeur de remplissage (6), l'ensemble de sachets d'emballage (2) en cours de formation,
et en ce que, tout en entraînant le récipient d'emballage (4), le convoyeur de récipients d'emballage (9) se déplace plus vite lors de l'évacuation d'un récipient d'emballage rempli (4) hors du poste d'empilage (3) de même que lors de la mise en place du récipient d'emballage à remplir (4) dans le poste d'empilage (3) que lors de l'opération d'empilage d'un ensemble de sachets d'emballage (2).

2. Installation selon la revendication 1, dans laquelle le brin supérieur couvrant (8) du convoyeur de remplissage (6) est adjacent à la chambre à dépression (10).

3. Installation selon l'une des revendications 1 ou 2, dans laquelle un convoyeur de récipients d'emballage (9) avec moyen d'immobilisation par dépression est disposé dans la zone du poste d'empilage (3) pour immobiliser efficacement les récipients d'emballage (1) au cours de leur transport.

4. Installation selon l'une des revendications 1 à 3, dans laquelle les moyens d'entraînement et le moyen de commande cinématique comportent un dispositif de commande qui est muni d'un dispositif de comptage du nombre de sachets d'emballage (1) dans les ensembles de sachets d'emballage (2) ainsi que de capteurs et/ou de barrages photoélectriques pour réguler la vitesse des dispositifs de convoyage existants et le déplacement de la tête d'empilage (8.1).

5. Installation selon l'une des revendications 1 à 4, dans laquelle, au cours de l'opération d'empilage d'un ensemble de sachets d'emballage (2), le convoyeur de récipients d'emballage (9) se déplace d'abord en fonction de la vitesse de positionnement en écailles et accélère ensuite en fonction de la vitesse de création d'intervalle de temps.
